(19) Europäisches Patentamt
European Patent Office
Office européen des brevets

(11) **EP 2 620 340 A1**

(12) **EUROPÄISCHE PATENTANMELDUNG**

(43) Veröffentlichungstag:
**31.07.2013 Patentblatt 2013/31**

(51) Int Cl.:
*B60W 10/06* (2006.01)      *B60W 10/101* (2012.01)
*B60W 30/18* (2012.01)      *F16H 61/66* (2006.01)

(21) Anmeldenummer: **13151579.3**

(22) Anmeldetag: **17.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.01.2012 DE 102012001759**

(71) Anmelder: **ROBERT BOSCH GMBH**
**70442 Stuttgart (DE)**

(72) Erfinder:
• **Wagner, Horst**
**89168 Niederstotzingen (DE)**
• **Baqasse, Brahim**
**70499 Stuttgart (DE)**

(74) Vertreter: **Thürer, Andreas**
**Bosch Rexroth AG**
**DC/IPR**
**Zum Eisengießer 1**
**97816 Lohr (DE)**

(54) **Verfahren zum Einstellen einer erwünschten Bremskraft auf einen Fahrantrieb**

(57)    Die Erfindung betrifft ein Verfahren zum Einstellen einer erwünschten Bremskraft auf einen Fahrantrieb, welcher einen mit einer Motordrehzahl arbeitenden Verbrennungsmotor und ein stufenloses Getriebe zur Übersetzung der Motordrehzahl in eine Fahrdrehzahl aufweist, wobei zum Einstellen der erwünschten Bremskraft das Übersetzungsverhältnis des stufenlosen Getriebes so eingestellt wird, dass sich eine bestimmte Motordrehzahl ergibt.

FIG. 2

EP 2 620 340 A1

**Beschreibung**

Die vorliegende Erfindung betrifft ein Verfahren zum Einstellen einer erwünschten Bremskraft auf einen Fahrantrieb, welcher von einem Verbrennungsmotor angetrieben wird, sowie eine Recheneinheit zu dessen Durchführung und einen Fahrantrieb.

Stand der Technik

Für das Abbremsen von Fahrantrieben mit Verbrennungsmotor (im Folgenden auch als ICE - internal combustion engine bezeichnet) sind zahlreiche Möglichkeiten bekannt. Neben den üblichen Bremsanlagen, Betriebsbremsanlage (BBA), Hilfsbremsanlage (HBA) und Feststellbremsanlage (FBA) kommt bei Verbrennungsmotoren auch die sog. Motorbremse zum Einsatz. Um eine hohe Bremsenergie verschleißfrei aufzunehmen, werden bspw. bei Nutzfahrzeugen Verfahren eingesetzt, um das Schleppmoment am Verbrennungsmotor noch zu erhöhen. Ausprägungen dieser speziellen Motorbremsen sind z.B. eine Abgas-Drosselklappe (Motorstaubremse) oder eine Dekompressionsbremse (Jake-Brake). Diese Bremsen können jedoch i.d.R. nur digital (An/Aus) oder in grober Quantisierung aktiviert werden.

Es ist wünschenswert, eine Möglichkeit anzugeben, um auch bei einer Motorbremse eine Bremskraft auf einen Fahrantrieb dosiert vorgeben zu können.

Offenbarung der Erfindung

Erfindungsgemäß wird ein Verfahren zum Einstellen einer erwünschten Bremskraft auf einen Fahrantrieb mit den Merkmalen des Patentanspruchs 1 vorgeschlagen. Vorteilhafte Ausgestaltungen sind Gegenstand der Unteransprüche sowie der nachfolgenden Beschreibung.

Vorteile der Erfindung

Die Erfindung macht sich die Tatsache zu Nutze, dass das Bremsmoment der Motorbremse und damit die auf den Fahrantrieb wirkende Bremskraft von der Drehzahl des Verbrennungsmotors abhängen. Näherungsweise gilt, dass das Bremsmoment umso höher ist, je höher die Motordrehzahl ist. Im Rahmen der Erfindung wird nun ein stufenloses Getriebe (im Folgenden auch als CVT - continuously variable transmission oder als Variator bezeichnet) verwendet, um das Übersetzungsverhältnis so anzupassen, dass sich die erwünschte Bremskraft ergibt.

Im Rahmen des möglichen Stellbereichs (gegeben durch die Spreizung des Getriebes, Schleppmoment des ICE) kann die Bremskraft am Fahrantrieb stufenlos eingestellt werden. Die Erfindung benötigt auch keine zusätzlichen Sensoren oder Aktoren. Die Erfindung kann vorteilhafterweise als unterlagerter Regler eines Geschwindigkeitsreglers eingesetzt werden. Die Erfindung ermöglicht insgesamt ein komfortableres Fahrverhalten gegenüber einer üblichen (d.h. digitalen) Nutzung von Motorbremsen. Es ist eine bessere Maschinenperformance zu erzielen, da bspw. eine zulässige Höchstgeschwindigkeit besser ausgenutzt werden kann (kein regelungstechnischer Grenzzyklus, welcher sich bei eine groben Quantisierung des Stelleingriffs ergibt).

Der Variator kann als mechanisches Getriebe, z. B. auf Basis eines Schubgliederbands, als elektrisches Getriebe, wie bei Seriell-Hybrid-Fahrzeugen oder Diesel-Elektrischen Antrieben üblich, als hydrostatisches Getriebe, z.B. aufgebaut aus Axialkolbenmaschinen, als mechanisch-hydrostatisches oder mechanisch-elektrisches Überlagerungsgetriebe (Leistungsverzweigungsgetriebe) realisiert sein.

Vorzugsweise wird die Bremskraft-Vorgabe im Rahmen einer Motordrehzahl-Regelung realisiert. Die Soll-Drehzahl ergibt sich dabei vorzugsweise aus der momentanen Fahrgeschwindigkeit und einem Bremskraft-Sollwert. Durch die dadurch erhaltene "closed-loop" Struktur ist die Bremskraftvorgabe weitgehend robust gegenüber Änderungen der Betriebsparameter.

Wird die Motordrehzahl-Regelung mit einem Soll-Drehmoment an der Kurbelwelle (d.h. das vom Variator auf den Motor übertragene Drehmoment, im folgenden mit $M_{Tra}$ bezeichnet) im Sinne einer abstrakten bzw. theoretischen Stellgröße realisiert, kann die Implementierung der Reglerstruktur unabhängig von der tatsächlichen Realisierung des Variators gemacht werden. Dies vereinfacht die Regelung beträchtlich. Die gesamte Regelstrecke hat nämlich üblicherweise einen ausgeprägt nichtlinearen Charakter. Durch die Wahl von $M_{Tra}$ als abstrakte Stellgröße des Reglers wird eine Linearisierung der Regelstrecke erreicht. Dadurch können ein linearer Regler sowie etablierte Reglerentwurfs-Methoden Verwendung finden.

Eine erfindungsgemäße Recheneinheit, z.B. ein Steuergerät eines Fahrantriebs, ist, insbesondere programmtechnisch, dazu eingerichtet, ein erfindungsgemäßes Verfahren durchzuführen. Ein erfindungsgemäßer Fahrantrieb weist eine erfindungsgemäße Recheneinheit auf.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

| | |
|---|---|
| Figur 1 | zeigt in einem Diagramm einen typischen Zusammenhang zwischen Antriebs-und Motorbremsleistung und Drehzahl für einen Verbrennungsmotor. |
| Figur 2 | zeigt schematisch einen Fahrantrieb mit Verbrennungsmotor und Variator, der erfindungsgemäß betrieben wird. |
| Figur 3 | zeigt schematisch eine bevorzugte Ausführungsform der Erfindung anhand eines Blockdiagramms. |
| Figur 4 | zeigt ein bevorzugtes Reglerschema einer Motordrehzahlregelung im Rahmen der Erfindung. |
| Figuren 5A-5D | zeigen anhand von Diagrammen das Verhalten über die Zeit eines erfindungsgemäß betrieben Fahrantriebs für einen willkürlichen Beispielfall. |

Detaillierte Beschreibung der Zeichnung

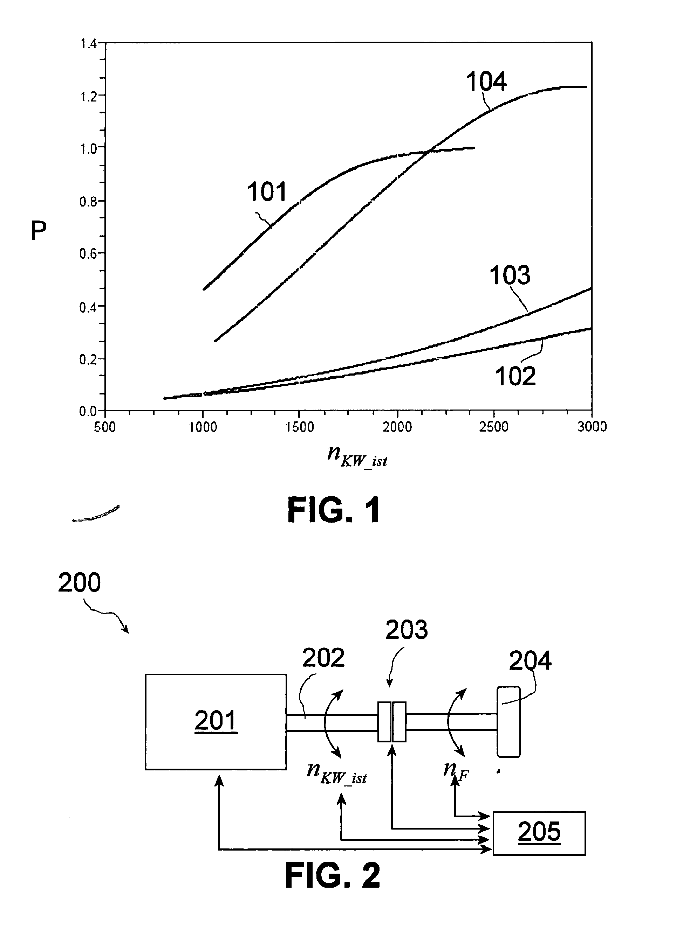

In Figur 1 sind in einem Diagramm unterschiedliche Leistungsverläufe P gegen die Motor- bzw. Kurbelwellendrehzahl $n_{KW\_ist}$ für einen beispielhaften Dieselmotor aufgetragen. Ein Verlauf 101 beschreibt die Antriebsleistung des Dieselmotors, ein Verlauf 102 beschreibt eine übliche Motorbremsleistung (Schleppmoment im Schubbetrieb), welche durch Motorreibung usw. verursacht wird. Die Verläufe spezieller Motorbremsen sind durch 103 für eine Motorstaubremse und 104 für eine Dekompressionsbremse dargestellt. Die einzelnen Leistungen sind auf die vom Dieselmotor maximal abgebbare Antriebsleistung normiert.

Es ist erkennbar, dass die Bremsleistungen der einzelnen Motorbremsen mit der Drehzahl zunehmen. Diese Tatsache wird im Rahmen der Erfindung für eine stufenlose Einstellung einer Bremskraft auf den Fahrantrieb genutzt. Es sei darauf hingewiesen, dass es sich bei dem steigenden Zusammenhang nicht um eine notwendige Bedingung handelt. Grundsätzlich stellt sich dadurch, dass - bei gegebener Fahrgeschwindigkeit - eine bestimmte Motordrehzahl eingestellt wird, durch die Variatorübersetzung auch eine Drehmomentübersetzung, also Bremskraft, ein.

Ein beispielhafter Fahrantrieb, für den die Erfindung Verwendung finden kann, ist in Figur 2 schematisch dargestellt und mit 200 bezeichnet. Der Fahrantrieb wird von einem beispielsweise als Dieselmotor 201 ausgebildeten Verbrennungsmotor angetrieben, der eine Kurbelwelle 202 mit einer Drehzahl $n_{KW\_ist}$ antreibt. Die Kurbelwelle ist antriebsseitig mit einem Variator 203 verbunden, welcher wiederum abtriebsseitig beispielsweise ein oder mehrere Räder 204 antreibt. Der Variator übersetzt dazu die Kurbelwellendrehzahl $n_{KW\_ist}$ in eine Fahrdrehzahl $n_F$. Für die Steuerung des Fahrantriebs 200 bzw. dessen Komponenten ist ein Steuergerät 205 vorgesehen, welches programmtechnisch zur Durchführung eines erfindungsgemäßen Verfahrens eingerichtet ist. Es steuert dazu insbesondere den Variator 203 an und wird mit Informationen über die momentanen Drehzahlen, die momentane Fahrgeschwindigkeit sowie ein von einem Fahrer übermittelten Verzögerungswunsch (im Rahmen dieser Anmeldung als Soll-Bremskraft bezeichnet) versorgt.

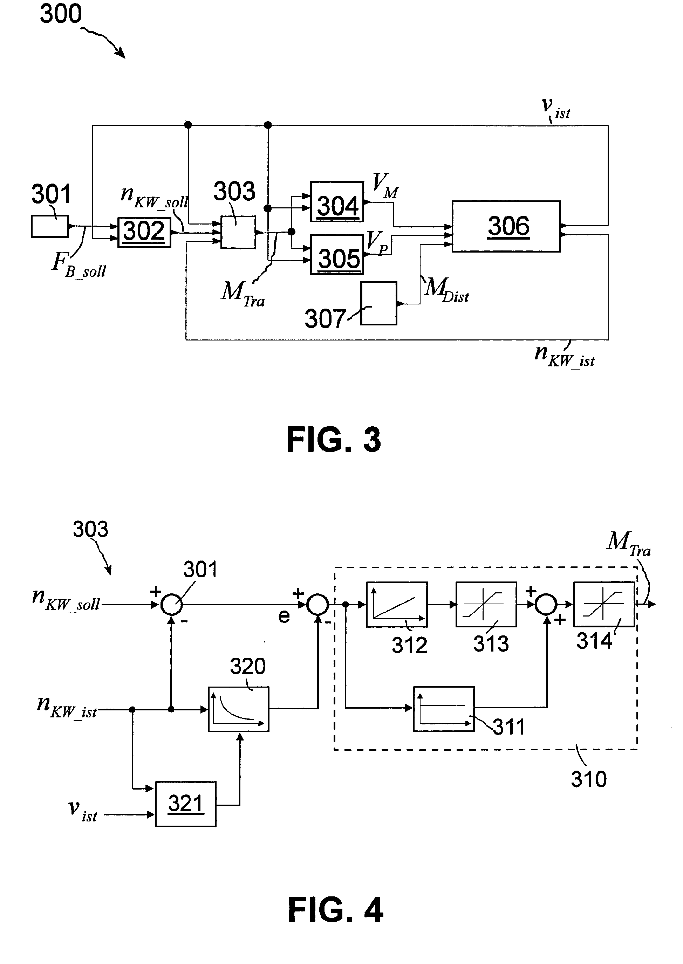

Wie im Zusammenhang mit Figur 1 erläutert, bestimmt bei gegebener Fahrgeschwindigkeit $v_{ist}$ bzw. Fahrdrehzahl $n_F$ die Motordrehzahl $n_{KW\_ist}$ die auf den Fahrantrieb wirkende Bremskraft. Um die Motordrehzahl einzustellen und damit eine erwünschte Bremskraft zu realisieren, sieht eine bevorzugte Ausführungsform der Erfindung eine Drehzahlregelung vor, von der eine bevorzugte Umsetzung im Folgenden unter Bezugnahme auf die Figuren 3 und 4 erläutert wird. Dabei ist in Figur 3 eine bevorzugte Ausführungsform der Erfindung anhand eines Blockdiagramms 300 dargestellt.

Eine Soll-Bremskraft $F_{B\_soll}$ wird beispielsweise vom Fahrer durch ein Bedienelement 301 (oder von einem Geschwindigkeitsregler) vorgeben und an ein Berechnungsglied 302 übermittelt. Das Berechnungsglied 302 bestimmt daraus eine erwünschte Motordrehzahl $n_{KW\_soll}$, und übermittelt diese an den eigentlichen Drehzahlregler 303, dessen innere Struktur in Figur 4 genauer dargestellt ist.

In dem Berechnungsglied 302 kann bspw. eine algebraische Funktion oder ein Kennfeld implementiert sein. Die Soll-Motordrehzahl $n_{KW\_soll}$ lässt sich angeben als Funktion der Soll-Bremskraft $F_{B\_soll}$, der Ist-Motordrehzahl $n_{KW\_ist}$, der momentanen Fahrgeschwindigkeit $v_{ist}$ (entspricht der Fahrdrehzahl), des Wirkungsgrades $\eta_{Tra}$ des Getriebes und der Zeit t (entfällt bei zeitinvarianten Systemen) zu:

$$n_{KW\_soll} = f\left(F_{B\_soll}, n_{KW\_ist}, v_{ist}, \eta_{Tra}, t\right) \qquad (1)$$

Der Zusammenhang kann bspw. simulativ oder messtechnisch ermittelt werden.

Die Drehzahlregelung bedient sich einer Modellierung des zeitlichen Verhaltens der Motordrehzahl $n_{KW\_ist}$ gemäß:

$$\frac{dn_{KW\_ist}}{dt} = \frac{1}{J_{ICE}} \cdot \left(M_{Tra} - M_{Drag} + M_{Dist}\right) \qquad (2)$$

mit

$M_{Tra}$: Antriebsmoment vom Getriebe auf den Motor
$M_{Drag}$: Schleppmoment des Motors (Summe Motorbremsen)
$M_{Dist}$: Störmoment (z.B. Hangabtrieb)
$J_{ICE}$: Massenträgheitsmoment von ICE und Primärseite des Getriebes

Der Drehzahlregler weist damit eine SISO (<u>S</u>ingle <u>I</u>nput <u>S</u>ingle <u>O</u>utput) Struktur auf. Diese Reglerstruktur ist auch unabhängig von der Realisierung des Variators. Als abstrakte Stellgröße des Reglers dient das Drehmoment $M_{Tra}$ an der Motorseite des Getriebes, woraus sich im Prinzip das Übersetzungsverhältnis des Variators ergibt.

Je nach Realisierung des Variators bestehen eine oder mehrere Eingriffsmöglichkeiten zur Einstellung von $M_{Tra}$. Im erläuterten Beispiel werde ein hydrostatischer Variator verwendet, bei dem zwei Axialkolbenmaschinen (Pumpe und Motor) gekoppelt sind. Wie üblich, ist das Übersetzungsverhältnis durch Vorgabe von Pumpenvolumen $V_P$ und Motorvolumen $V_M$ einstellbar. Um hier eine eindeutige Abbildung des Drehmoments $M_{Tra}$ auf die Stellgrößen $V_P$ und $V_M$ zu erhalten, ist ein Freiheitsgrad zu eliminieren. Dieser Freiheitsgrad kann vorteilhafterweise genutzt werden, um weitere Randbedingungen bei der Ansteuerung zu berücksichtigen. Diese weiteren Bedingungen können, ohne Anspruch auf Vollständigkeit, sein:

- Betrieb bei möglichst geringem Druck (erhöht die Lebensdauer)
- Betrieb bei möglichst hoher dissipativer Energie des Getriebes (ergibt höchst mögliche Bremsleistung)
- Betrieb bei möglichst geringer dissipativer Energie des Getriebes (führt zu geringster Erwärmung des hydrostatischen Antriebs)
- Betrieb so, dass die Stellgrößen $V_P$ und $V_M$ möglichst wenig abweichen von der Stellung, die sie bei Vortriebsanforderung einnehmen würden (ermöglicht einen schnellen und komfortablen Übergang zwischen Schub- und Zugbetrieb)

Die beiden Stellgrößen werden basierend auf $M_{Tra}$ sowie $v_{ist}$ in den Berechnungsgliedern 304 und 305 berechnet. In den Berechnungsgliedern kann bspw. je eine algebraische Funktion oder ein Kennfeld implementiert sein. Für die Ansteuerung der hydrostatischen Maschinen gilt damit:

$$V_M = f\left(M_{Tra}, v_{ist}, t\right) \qquad (3)$$

$$V_P = f\left(M_{Tra}, v_{ist}, t\right) \qquad (4)$$

Kybernetisch betrachtet, handelt es sich dabei um eine Steuerung (open loop control), da $M_{Tra}$ üblicherweise nicht direkt messbar ist.

Der Block 306 bezeichnet die Regelstrecke. Hier können beispielsweise unterlagerte Stellungsregler für die soeben genannten Volumina vorhanden sein. Weiterhin sind hier Erfassungsmittel, bspw. Sensoren, für die genannten Größen $v_{ist}$ (bzw. Fahrdrehzahl) und $n_{KW\_ist}$ vorhanden.

Ein möglicherweise vorhandenes Störmoment $M_{Dist}$, bspw. ein Hangabtrieb, ist durch 307 dargestellt.

Eine bevorzugte Realisierung des Drehzahlreglers 303 ist in Figur 4 dargestellt. Der Sollwert $n_{KW\_soll}$ wird einem Vergleichsglied 301 zugeführt und mit dem Istwert $n_{KW\_ist}$ verglichen. Eine sich daraus ergebende Regelabweichung e wird einem PI-Regler 310 mit einem P-Glied 311, einem I-Glied 312 mit Anti-Wind-Up 313 des I-Anteils sowie einer Stellgrößenbeschränkung 314 zugeführt. Wie erläutert, wird als abstrakte Stellgröße das Moment $M_{Tra}$ ausgegeben. Diese statische Regelung wird in der dargestellten bevorzugten Ausführungsform dynamisch korrigiert, um insbesondere bei hohen Drehzahlgradienten die Trägheiten des Motors beim Stellen der Bremskraft zu berücksichtigen. In der Drehzahlregelung ist dies realisiert durch die Aufschaltung eines Korrekturwerts (entspricht der differenzierten Drehzahl) aus einem Differenzierglied mit Verzögerung 320, z.B. einem DT1-Glied, auf die Regelabweichung e. Es versteht sich, dass die Aufschaltung auch direkt auf $n_{KW\_soll}$ vor dem Vergleichsglied 301 erfolgen kann. Dies ist gleichwertig.

Die Parameter (insbesondere Differenzierbeiwert $K_D$ und Differenzierzeit $T_D$) des DT1-Glieds 320 werden vorzugsweise von einem Parameterberechnungsglied 321 basierend auf dem aktuellen Betriebspunkt ($n_{KW\_ist}$; $v_{ist}$) vorgegeben, um so den Einfluss der dynamischen Korrektur einstellen zu können. Insbesondere kann $T_D$ eingesetzt werden, um ein Messrauschen auf $n_{KW\_ist}$ zu dämpfen. Vorzugsweise gehen in die Bestimmung von $K_D$ und $T_D$ ein:

- Das Massenträgheitsmoment $J_{ICE}$ des Verbrennungsmotors einschließlich aller mit rotierenden Komponenten
- Das Übersetzungsverhältnis des Variators. Wie bei den statischen Bremsmomenten ist die Übersetzung des Variators auch für die dynamischen Momente wirksam. Repräsentativ für das Übersetzungsverhältnis sind $n_{KW\_ist}$ und $v_{ist}$.

Beispielsweise werden die Parameter so vorgegeben, dass das DT1-Glied 320 auf eine Rampe konstanter Steigung am Eingang (welche von einem konstanten Beschleunigungsmoment hervorgerufen wird) mit einem konstanten Wert am Ausgang antwortet, der genau diesem Beschleunigungsmoment entspricht.

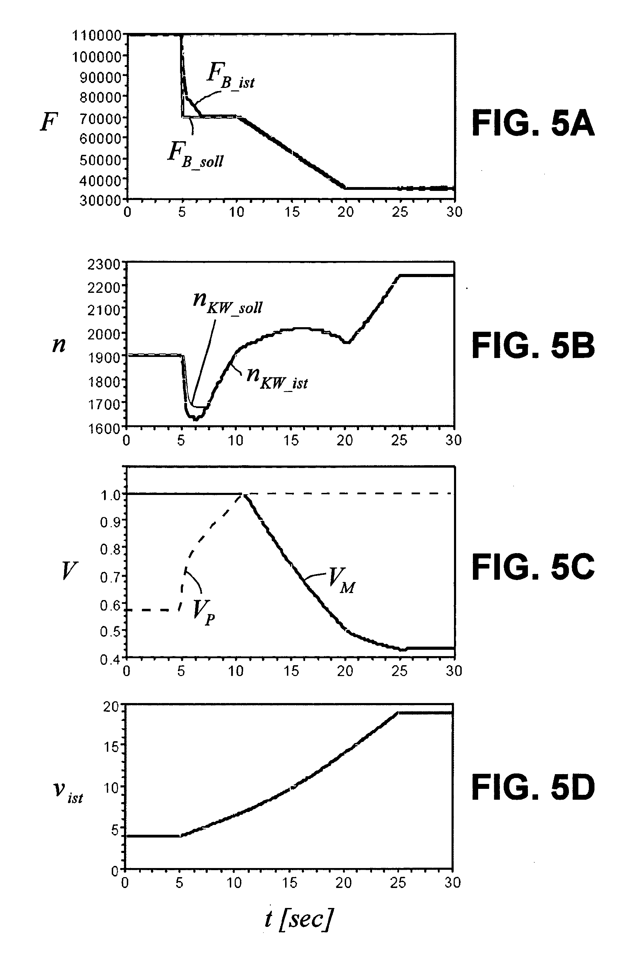

Unter Bezugnahme auf die Figuren 5A bis 5D wird nun ein beispielhafter Bremsvorgang im Rahmen der Erfindung erläutert. Das Beispiel zeigt den Fall eines Fahrantriebs, auf den ein beschleunigendes Störmoment (insbesondere Hangantrieb) wirkt.

Figur 5A zeigt den Bremswunsch über die Zeit t, wobei eine Soll-Bremskraft $F_{B\_soll}$ (willkürlich, z.B. Fahrerwunsch) und die sich im Rahmen der Erfindung daraus ergebende Istbremskraft $F_{B\_ist}$ aufgetragen sind. Figur 5B zeigt die sich aus der Soll-Bremskraft $F_{B\_soll}$ ergebende Soll-Motordrehzahl $n_{KW\_soll}$ mit aufgeschalteter Dynamikkorrektur (siehe oben). Die dynamische Kompensation wirkt entgegen der tatsächlichen ICE Beschleunigung. Figur 5B zeigt weiter die sich im Rahmen der Erfindung daraus ergebende Ist-Motordrehzahl $n_{KW\_ist}$. Figur 5C zeigt die sich aus der Drehzahlregelung ergebende Soll-Volumina (bezogen auf das jeweilige Nennvolumen) von Motor und Pumpe des hydostatischen Variators. Figur 5D zeigt schließlich die Ist-Geschwindigkeit des Fahrantriebs.

Zu Beginn (t = 0) fährt das Fahrzeug mit konstanter Geschwindigkeit bergab. Bei t = 5s sowie t = 10s wird der Bremskraft-Sollwert verringert (Führungsverhalten). Dadurch beschleunigt das Fahrzeug. Zum Zeitpunkt t = 25s ändert sich die Steigung der Gefällstrecke (Störverhalten).

Wie in Figur 5A erkennbar, folgt die Ist-Bremskraft gut der Soll-Bremskraft. Durch das Absenken der Soll-Bremskraft bei t = 5s sinkt auch die Soll-Drehzahl. Dies wird über eine Erhöhung des Pumpenvolumen $V_P$ erreicht. Hat das Pumpenvolumen $V_P$ das Maximum erreicht, wird eine weitere Erhöhung durch Reduzierung des Motorvolumens $V_M$ erreicht.

Zwischen t = 5s und t = 10s bleibt die Soll-Bremskraft konstant und der Fahrantrieb beschleunigt. Die Soll-Drehzahl wird der Ist-Geschwindigkeit entsprechend nachgeführt und steigt deshalb an.

Zwischen t = 10s und t = 20s wird die Soll-Bremskraft reduziert und der Fahrantrieb beschleunigt schneller. Die Reduzierung der Soll-Bremskraft führt zu einer Reduzierung der Soll-Drehzahl, die Erhöhung der Geschwindigkeit zu einer gleichzeitigen Verschiebung des Betriebspunktes und damit zu einer Erhöhung der Soll-Drehzahl. Die Therlagerung der beiden Effekte führt zu dem Verlauf in Figur 5B.

Zwischen t = 20s und t = 25s wird die Soll-Bremskraft wieder konstant gehalten und der Fahrantrieb beschleunigt weniger schnell als zuvor. Die von der Reduzierung der Soll-Bremskraft zuvor hervorgerufene Reduzierung der Soll-Drehzahl ist hier nicht vorhanden, die Erhöhung der Geschwindigkeit führt durch die weitere Verschiebung des Betriebspunktes zu einer erneuten Erhöhung der Soll-Drehzahl.

Ab t = 25s reduziert sich das Störmoment. Die Ist-Bremskraft ist jetzt groß genug, um eine weitere Beschleunigung des Fahrantriebs zu verhindern. Geschwindigkeit und Drehzahl ändern sich nicht mehr.

**Patentansprüche**

1. Verfahren zum Einstellen einer erwünschten Bremskraft ($F_{B\_soll}$) auf einen Fahrantrieb (200), welcher einen mit einer Motordrehzahl ($n_{KW\_ist}$) arbeitenden Verbrennungsmotor (201) und ein stufenloses Getriebe (203) zur Übersetzung der Motordrehzahl in eine Fahrdrehzahl ($n_F$) aufweist, wobei zum Einstellen der erwünschten Bremskraft ($F_{B\_soll}$) das Übersetzungsverhältnis des stufenlosen Getriebes (203) so eingestellt wird, dass sich eine bestimmte Motordrehzahl ($n_{KW\_ist}$) ergibt.

2. Verfahren nach Anspruch 1, wobei aus der erwünschten Bremskraft ($F_{B\_soll}$) ein Sollwert ($n_{KW\_ist}$) für die Motordrehzahl bestimmt wird.

3. Verfahren nach Anspruch 2, wobei der Sollwert ($n_{KW\_soll}$) für die Motordrehzahl in Abhängigkeit von der momentanen Motordrehzahl ($n_{KW\_ist}$), einer momentanen Fahrgeschwindigkeit oder der Fahrdrehzahl, eines Wirkungsgrades des stufenlosen Getriebes (203) und/oder der der Zeit bestimmt wird.

4. Verfahren nach Anspruch 2 oder 3, wobei die Motordrehzahl ($n_{KW\_ist}$) durch Erzeugung einer Stellgröße auf den Sollwert ($n_{KW\_soll}$) für die Motordrehzahl geregelt wird.

5. Verfahren nach Anspruch 4, wobei bei der Regelung ein Massenträgheitsmoment des Verbrennungsmotors (201) und des stufenlosen Getriebes (203) berücksichtigt wird.

6. Verfahren nach Anspruch 5, wobei der Sollwert ($n_{KW\_soll}$) für die Motordrehzahl mittels eines veränderlichen Korrekturwerts verändert wird, um das Massenträgheitsmoment des Verbrennungsmotors (201) und des stufenlosen Getriebes (203) zu berücksichtigen.

7. Verfahren nach Anspruch 6, wobei der Korrekturwert eine Differenzierung der momentanen Motordrehzahl ($n_{KW\_ist}$) enthält.

8. Verfahren nach einem der Ansprüche 4 bis 7, wobei die Stellgröße ein von dem stufenlosen Getriebe (203) auf den Verbrennungsmotor (201) übertragenes Drehmoment ($M_{Tra}$) ist.

9. Verfahren nach einem der Ansprüche 4 bis 8, wobei aus der Stellgröße eine das Übersetzungsverhältnis des stufenlosen Getriebes (203) beeinflussende Größe ($V_P$, $V_M$) bestimmt wird.

10. Recheneinheit (205), die programmtechnisch dazu eingerichtet ist, ein Verfahren nach einem der vorstehenden Ansprüche durchzuführen.

11. Fahrantrieb (200), welcher einen mit einer Motordrehzahl ($n_{KW\_ist}$) arbeitenden Verbrennungsmotor (201) und ein stufenloses Getriebe (203) zur Übersetzung der Motordrehzahl in eine Fahrdrehzahl ($n_F$) und eine Recheneinheit (205) nach Anspruch 10 aufweist.

12. Fahrantrieb (200) nach Anspruch 11, wobei das stufenlose Getriebe (203) als mechanisches Getriebe, als elektrisches Getriebe, als hydrostatisches Getriebe, als mechanisches Leistungsverzweigungsgetriebe, als mechanisch-hydrostatisches Leistungsverzweigungsgetriebe oder als mechanisch-elektrisches Leistungsverzweigungsgetriebe ausgebildet ist.

13. Computerprogramm mit Programmcodemitteln, die einen Computer oder eine entsprechenden Recheneinheit veranlassen, ein Verfahren nach einem der Ansprüche 1 bis 9 durchzuführen, wenn sie auf dem Computer bzw. der entsprechenden Recheneinheit, insbesondere nach Anspruch 10, ausgeführt werden.

**FIG. 1**

**FIG. 2**

**FIG. 3**

**FIG. 4**

FIG. 5A

FIG. 5B

FIG. 5C

FIG. 5D

| | Europäisches Patentamt European Patent Office Office européen des brevets | **EUROPÄISCHER RECHERCHENBERICHT** | **Nummer der Anmeldung** EP 13 15 1579 |
|---|---|---|---|

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 785 327 A2 (NISSAN MOTOR [JP]) 16. Mai 2007 (2007-05-16) * Absätze [0034] - [0038] * ----- | 1-13 | INV. B60W10/06 B60W10/101 B60W30/18 F16H61/66 |
| X | US 5 514 050 A (BAEUERLE PETER [DE] ET AL) 7. Mai 1996 (1996-05-07) * das ganze Dokument * ----- | 1-13 | |

| | RECHERCHIERTE SACHGEBIETE (IPC) |
|---|---|
| | B60W F16H |

Der vorliegende Recherchenbericht wurde für alle Patentansprüche erstellt

| Recherchenort | Abschlußdatum der Recherche | Prüfer |
|---|---|---|
| München | 17. Mai 2013 | Meritano, Luciano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 1579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2013

| Im Recherchenbericht angeführtes Patentdokument | Datum der Veröffentlichung | Mitglied(er) der Patentfamilie | Datum der Veröffentlichung |
|---|---|---|---|
| EP 1785327 A2 | 16-05-2007 | CN 1963265 A | 16-05-2007 |
| | | EP 1785327 A2 | 16-05-2007 |
| | | JP 2007153317 A | 21-06-2007 |
| | | KR 20070049986 A | 14-05-2007 |
| | | US 2007105689 A1 | 10-05-2007 |
| US 5514050 A | 07-05-1996 | DE 4330391 A1 | 06-10-1994 |
| | | GB 2276683 A | 05-10-1994 |
| | | JP H06323416 A | 25-11-1994 |
| | | US 5514050 A | 07-05-1996 |

EPO FORM P0461

Für nähere Einzelheiten zu diesem Anhang : siehe Amtsblatt des Europäischen Patentamts, Nr.12/82